# EUROPEAN PATENT APPLICATION

(11) **EP 3 536 473 A1**
(43) Date of publication of application: **11.09.2019**
(21) Application number: 18190834.4
(22) Date of filing: 24.08.2018
(51) Int. Cl.: B29C 33/12, B29C 45/14, B29C 45/26, B32B 3/12, B32B 37/14, B29C 45/76

(54) **A PRODUCTION METHOD FOR A RESIN MOLDED ARTICLE WITH TWO INTEGRATED PERFORATED PLATES**

(30) Priority: 06.03.2018 JP 2018040209; 09.03.2018 JP 2018042831
(71) Applicant: SHONAI Industry Inc., Hamamatsu-shi Shizuoka 431-1208 (JP)
(72) Inventor: KANOH, Noriyuki, Okazaki City, Aichi 444-0011 (JP)
(74) Representative: J A Kemp

(57) **Abstract**

A production method for a resin molding (1) inserted a 1st plate (10) having many through holes (10a) and a 2nd plate (11) having many through holes (11a), which are arranged in parallel and facing each other during a manufacturing process, comprising a 1st plate process and a 2nd plate process.

The 1st plate process in which, the 1st plate (10) moves to the 2nd plate (11) side from a 1st plate start position (U0) and returns a 1st plate end position (P3) near the 1st plate start position (U0) in a cavity filled with a molten resin (4) kept to a high pressure.

The 2nd plate process in which, the 2nd plate (11) moves to the 1st plate (10) side from a 2nd plate start position (V0) and returns a 2nd plate end position (P4) near the 2nd plate start position in the cavity.

This makes it possible to spread the molten resin (4) to even a shielded area with a reciprocal plate motion. That is, the molten resin (4) is able to pass through holes (10a, 11a) back and forth with the reciprocal plate motion and reach the shielded area finally.

Therefore, the molten resin (4) spread through the surface of the 1st plate (10) and the 2nd plate (11), and a resin wettability of these plates are improved. And as a result, the resin molding (1) strength against a distortion is improved.

## Description

### BACKGROUND OF THE INVENTION

### FIELD OF THE INVENTION

This invention relates to a production method for a resin molding inserted a 1st plate having many through holes and a 2nd plate having many through holes for reinforcing.

### DESCRIPTION OF RELATED ART

Generally, in the case of production for a resin molding, an insert material needs to be kept in a fixed position in a cavity to avoid a surface sink or a holding parts trace.

Concerning keeping an insert material in a cavity, a production method for a resin molding is disclosed, in which a fixing pin holds an insert material in a cavity, and a molten resin is injected into the cavity with keeping the insert material position (referred hereinafter to Japanese laid-open patent application No. h08-25410 as a 1st prior art).

In the case of an obstacle is in a cavity, a molten resin flow from is split and merged by the obstacle, and a sprit flow and a merge flow make a weld line, a V-shaped notch line etc. to a surface. And a production method for a resin molding to counter these problems is disclosed in which, a gate position and a cavity position are adjusted by a plunger or a screw position, and a weld line position is able to be controlled (referred hereinafter to Japanese laid-open patent application No. 2016-215406 as a 2nd prior art). And another countermeasure technique is disclosed too in which, a molten resin flow is controlled by regulating parts, and a weld line occurrence is able to be controlled (referred hereinafter to Japanese laid-open patent application No. 2010-274439 as a 3rd prior art).

And another production method for a resin molding is disclosed, in which, a resin molding inserted an insert material is formed as a semi-finished product, then next molten resin injection is carried out to the semi-finished product to make a final product (referred hereinafter to Japanese laid-open patent application No. h09-19940 as a 4th prior art).

And a metal mold which forms a cavity and supports an insert material is disclosed, in which the metal mold has a slidable part which is able to support the insert material. And this slidable part can be driven by a molten resin sub flow to a back end (referred hereinafter to Japanese laid-open patent application No. 2008-49592 as a 5th prior art).

From 1st to 5th prior art, an insert material is able to be kept in fixed position in a cavity with avoiding a surface sink or a holding parts trace. But in those prior art, total apparatus scale for a resin molding is too large, and a production process is too many and complicated.

A resin panel with inserted plates which are set at front and back, is enforced against a distortion, because of an increase of surface tensile strength by these insert plates. Additionally in the case that a molten resin wrap around these insert plates and these insert plates are integrated with concreted resin, a surface tensile strength become stronger.

And another resin panel with an inserted net is disclosed too (referred hereinafter to Japanese patent No. 6059841 as a 6th prior art).

In these resin panels, at a shielded area formed by an inserted material to a molten resin flow, a molten resin cannot go around this back area, and the resin filling failure caused by a lack resin wrapping around leads to an insufficient strength of a final product.

The present invention has been made based on the above drawbacks, and the main object of this invention is to prevent a resin filling failure at a shielded area formed by an inserted material.

In the present invention, a production method for a resin molding inserted a 1st plate having many through holes and a 2nd plate having many through holes, which are arranged in parallel and facing each other during a manufacturing process, contains a 1st plate process and a 2nd plate process.

The 1st plate process is that the 1st plate moves to the 2nd plate side from a 1st plate start position and returns a 1st plate end position near the 1st plate start position in a cavity filled with a molten resin kept to a high pressure.

The 2nd plate process is that the 2nd plate moves to the 1st plate side from a 2nd plate start position and returns a 2nd plate end position near the 2nd plate start position in the cavity.

This makes it possible to spread a molten resin to even a shielded area with a reciprocal plate motion. That is, a molten resin is able to pass many through holes back and forth with the reciprocal plate motion and reach the shielded area finally.

Therefore, a molten resin spread through the surface of the 1st plate and the 2nd plate, and a resin wettability of these plates are improved. And as a result, to prevent a void forming between plate and resin, a resin molding strength against a distortion is improved.

In the present invention, the cavity is formed by an upper metal mold and a lower metal mold, and the upper metal mold and the lower metal mold have a movable bar which is driven by an actuator and is able to move forward and backward in the cavity respectively. And the movable bar has an electromagnet which is able to catch and release a metal plate. And at the 1st plate end position the electromagnet current is cut off and the movable bar releases the 1st plate. And at the 2nd plate end position the electromagnet current is cut off and the movable bar releases the 2nd plate.

This makes it possible to make the movable bar structure and motion simple. Therefore, total apparatus scale for a resin molding is able to be compact, and the number of production processes is able to be reduced.

In the present invention, the 1st plate and the 2nd plate are a punched metal plate. A punched metal plate is easily obtainable in this field, therefore final products cost are able to be reduced.

In the present invention, the molten resin is a thermosetting resin including an epoxy and a polyurethane resin. A thermosetting resin is a liquid monomer at first, therefore a thermosetting resin reaches to the shielded area relatively easily because of a rich fluidity.

In the present invention, a wire is attached to the 1st plate or the 2nd plate.

This makes it possible to omit a process attaching a wire to a resin molding.

### BRIEF DESCRIPTION OF THE DRAWINGS

A preferred forms of the present invention are illustrated in the accompanying drawings in which:
Fig.1 is a perspective view of a resin molding inserted a 1st plate having many through holes and a 2nd plate having many through holes according to a 1st embodiment of the invention;
Fig.2 is a longitudinal cross sectional view of a resin molding apparatus;
Figs.3 through 7 are longitudinal cross sectional views around a lower metal mold;
Fig.8 is a longitudinal cross sectional view at removing a resin molding from a metal mold;
Fig.9 is a block diagram of an actuator;
Fig.10 is a is a perspective view of a resin molding with set a wire for communication according to a 2nd embodiment of the invention;
Fig.11 is a is a longitudinal cross sectional view of a resin molding;

### DETAILED DESCRIPTION OF PREFERED EMBODIMENTS

In the following description of the depicted embodiments, the same reference numerals are used for features of the same type.

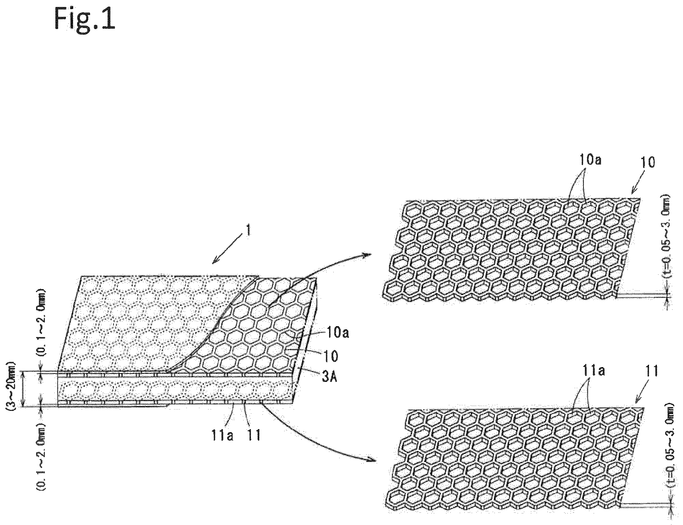

Referring Figs.1 through 9 shown is a production method for a resin molding inserted a 1st plate having many through holes and a 2nd plate having many through holes, according to a 1st embodiment of the invention.

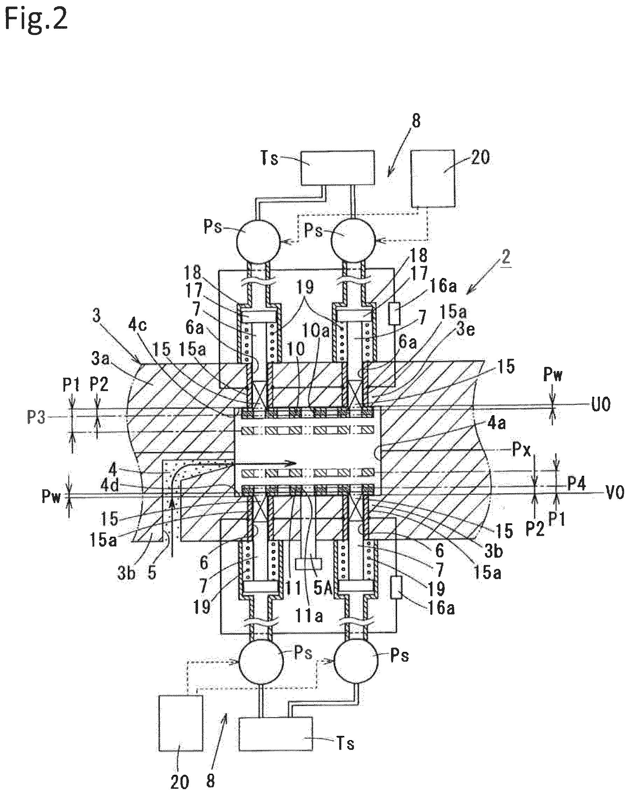

As shown Fig.1, a resin molding 1 is inserted a 1st plate 10 having many through holes 10a and a 2nd plate 11 having many through holes 11a. And the resin molding 1 is formed by a resin molding apparatus 2, which is shown in Fig. 2.

As shown Fig.1, the resin molding apparatus 2 forms the resin molding 1 covered a resin material 3A all surfaces,

For example, the 1st plate 10 and the 2nd plate 11 are a thin punched metal plate (for example, these thickness t are 0.05mm-3.0mm.) having the many through holes 10a and 11a respectively, which show hexagonal shape and are arranged in honeycomb.

The punched metal plate is a magnetic substance metal plate and has many through holes at high density. And the 1st plate 10 and the 2nd plate 11 need to be reinforcing and easily magnetized only. Therefore, the 1st plate 10 and the 2nd plate 11 are not necessarily to be the punched metal plate. For example, the 1st plate 10 and the 2nd plate 11 may be a net, an expanded metal, a fabric, or a resin, which is able to be easily magnetized.

As shown Fig.2, the resin molding apparatus 2 has a metal mold 3 consisting of an upper metal mold 3a and a lower metal mold 3b. And the upper metal mold 3a and the lower metal mold 3b separate a cavity by a cavity forming part 4a. And the resin molding 1 outline is determined by the shape of the cavity forming part 4a.

In the cavity, the 1st plate 10 and the 2nd plate 11 are arranged in parallel and facing each other. And a molten resin 4 is injected into the cavity, and the resin molding 1 inserted the 1st plate 10 and the 2nd plate is formed. And a upper plane and a lower plane of the cavity forming part 4a which are arranged in parallel and facing each other are called a 1st inner plane 4c and a 2nd inner plane 4d hereafter respectively.

The molten resin 4 includes a thermosetting resin and a thermoplastic resin. And the molten resin 4 is able to be selected from a polypropylene, a polystyrene, an epoxy, a polyurethane etc., including an engineering plastic. Therefore, the price of the resin molding 1 is able to be reduced to select the lower price material.

At the left side of the lower metal mold 3b in the figure, an injection gate 5 is provided, and at the center of the lower metal mold 3b in the figure, a push pin 5A, which is able to push out the resin molding 1, is set slidably. And at both sides of the push pin 5A, a pair of a through hole 6, which penetrates the bottom of the lower metal mold 3b, is provided.

And to each through hole 6, a movable bar 7 is provided slidably. The movable bar 7 is driven by an actuator 8 and is able to move forward and backward in the cavity respectively. A pair of a through hole 6a and the movable bar 7 are provided to the upper metal mold 3a, too.

Each movable bar 7 has an electromagnet 15 which is able to catch and release a metal plate. The electromagnet 15 is controlled an electromagnet current by a controller 16a, depending the position of the 1st plate 10 and the 2nd plate 11. And at the through hole 6,6a, a conductive tube 15a is inserted. Therefore, the electromagnet 15 and the controller 16a are connected by the conductive tube 15a. The actuator 8 has a piston 17, a cylinder 18, a driving device Ps having an oil tank Ts, for example.

Around the upper metal mold 3a, the piston 17 is connected to the upper end of the movable bar 7, and is always biased from a cavity center Px to the 1st inner plane 4c by a compression coil spring 19, for example.

The driving device Ps is controlled by a controller 20.

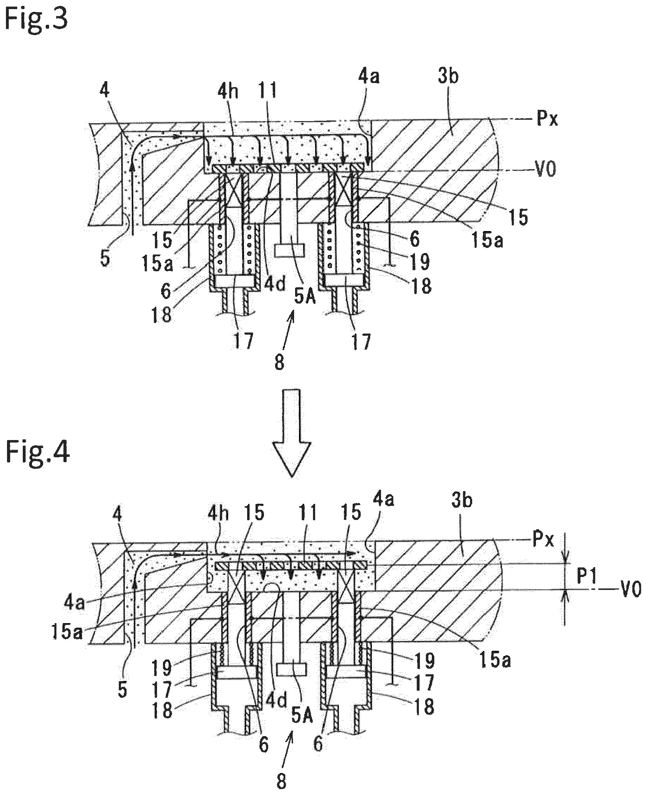

As shown Fig.3, before injecting the molten resin 4 as a molten resin flow 4h, an electric current is sent to the electromagnet 15, to set the 2nd plate 11 at a 2nd plate start position V0.

And the molten resin 4 is injected into the cavity. At last, the cavity is filled with the molten resin 4 kept to a high pressure.

In this condition, the 2nd plate 11 moves to the 1st plate 10 side, that is to the cavity center Px side, from the 2nd plate start position V0 and returns a 2nd plate end position P4 in the cavity.

As shown Fig.4, the actuator 8 drives the movable bar 7 connected to the 2nd plate 11 by the electromagnet 15 into the cavity. Therefore, the 2nd plate 11 moves from the 2nd plate start position V0 to a predetermined distance P1.

In this process, the molten resin flow 4h pass through the through holes 11a, showing down flow in the figure.

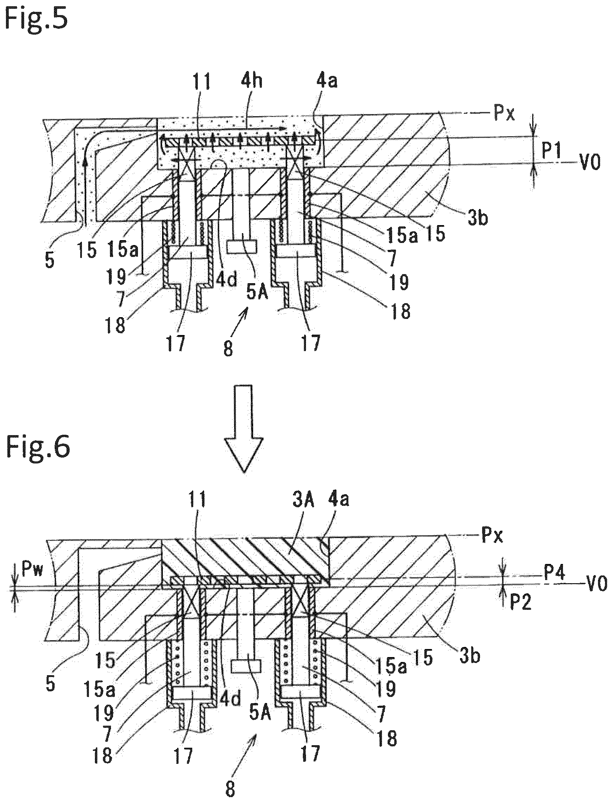

And as shown Fig.5, the 2nd plate 11 returns to the 2nd plate end position P4.

In this process, the molten resin flow 4h pass through the through holes 11a, showing up flow in the figure.

And as shown Fig.6, the 2nd plate 11 is stopped at the 2nd plate end position P4 near the 2nd plate start position V0. A gap between the 2nd plate 11 and 2nd inner plane 4d is defined P2.

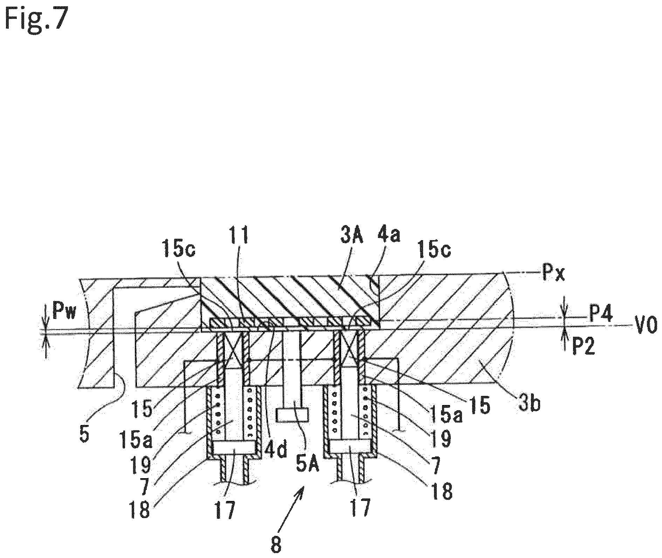

As shown Fig.7, at the 2nd plate end position P4, the electromagnet 15 current is cut off and the movable bar 7 returns to the 2nd plate start position V0 by using the actuator 8.

The 2nd plate 11 is left at the 2nd plate end position P4, because the electromagnet 15 current is cut off. And at the 2nd plate start position V0, an upper plane 15c of the electromagnet 15 and the 2nd inner plane 4d are arranged to be flush.

And the molten resin 4 is spread to the every corner and the cavity is filled with the resin material 3A.

At the upper metal mold 3a, the movable bar 7 is operated with the same action in the cavity filled with the molten resin 4 kept to a high pressure.

Therefore, the 1st plate 10 moves to the 2nd plate 11 side, that is to the cavity center Px side, from the 1st plate start position U0.

In this process, the molten resin flow 4h pass through the through holes 10a, as an up flow.

Then the 1st plate 10 returns to the 1st plate end position P3.

In this process, the molten resin flow 4h pass through the through holes 10a, as a down flow.

And at the 1st plate end position P3, the electromagnet 15 current is cut off and the movable bar 7 returns to the 1st plate start position U0 by using the actuator 8.

The 1st plate 10 is left at the 1st plate end position P3, because the electromagnet 15 current is cut off. And at the 1st plate start position U0, an upper plane 15c of the electromagnet 15 and the 1st inner plane 4c are arranged to be flush.

And the molten resin is spread to the every corner and the cavity is filled with the resin material 3A, as well as the lower metal mold 3b.

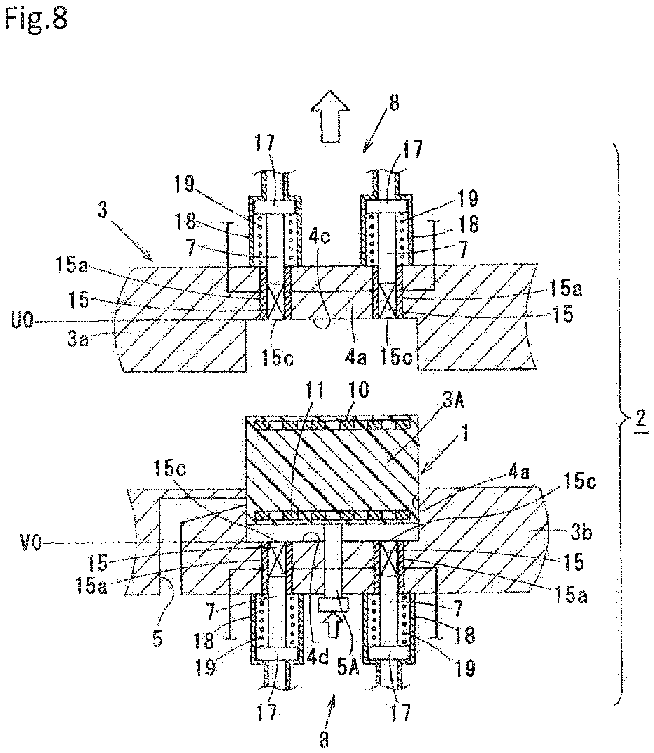

As shown Fig.8, after having finished the molding, the metal mold 3 is opened by an actuator automatically timer controlled.

Then the push pin 5A is driven by an actuator, and the resin molding 1 is pushed away from the metal mold 3.

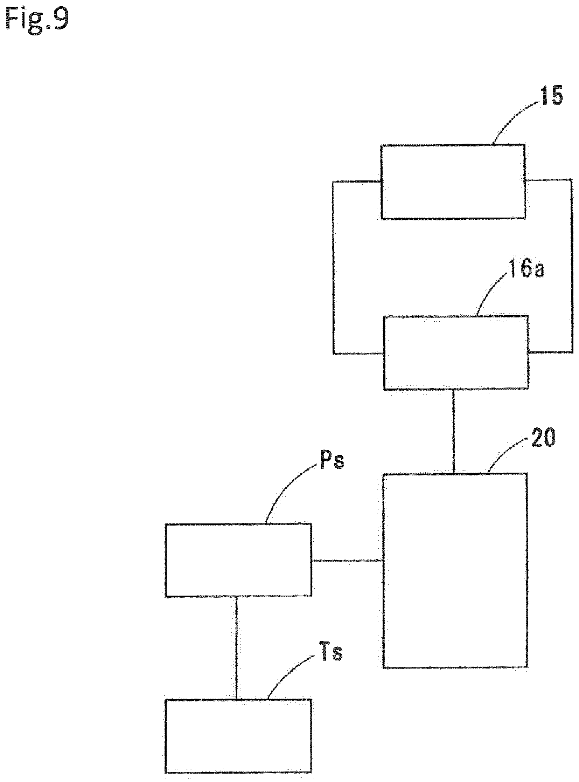

As shown Fig.9, in the case of that the metal mold 3 is opened and the 1st plate 10 and the 2nd plate 11 are set at the 1st plate start position U0 and the 2nd plate start position V0, respectively, an electric current is sent to the electromagnet 15 by the controller 16a which is commanded by an ECU 20. Thus, the electromagnet 15 catches the 1st plate 10 and the 2nd plate 11, respectively.

Then the driving device Ps sends oil from the oil tank Ts to the cylinder 18, to drive the piston 17 against the compression coil spring 19 force.

And the movable bar 7 is driven to the cavity center Px side, therefore the 1st plate 10 and the 2nd plate 11 is able to be moved to the cavity center Px side, respectively.

Now the position of the 1st plate 10 and the 2nd plate 11 are detected by a position sensor. After the 1st plate 10 and the 2nd plate 11 reach to a predetermined distance, the ECU 20 commands the driving device Ps to return the 1st plate 10 and the 2nd plate 11.

Then the cylinder 18 returns oil to the oil tank Ts, to return the piston 17 by the compression coil spring 19 force, the movable bar 7 returns, and the 1st plate 10 and the 2nd plate 11 returns to the 1st plate end position P3 and the 2nd plate end position P4 respectively.

And at the 1st plate end position P3, the electromagnet 15 current is cut off and the movable bar 7 releases the 1st plate 10 and, at the 2nd plate end position P4 the electromagnet 15 current is cut off and the movable bar 7 releases the 2nd plate 11.

Moreover, the movable bar 7 returns to the 1st plate start position U0 and the 2nd plate start position V0, with left the 1st plate 10 at the 1st plate end position P3 and the 2nd plate 11 at the 2nd plate end position P4, respectively. Finally, the upper plane 15c of the electromagnet 15 and the 1st inner plane 4c or the 2nd inner plane 4d are arranged to be flush, and the driving device Ps is stopped.

In the 1st embodiment, the 1st plate 10 (the 2nd plate 11) moves to the cavity center Px side from the 1st plate start position U0 (the 2nd plate start position V0) and returns to the near position of the 1st inner plane 4c (the 2nd inner plane 4d).

This makes it possible that the molten resin flow 4h is able to pass many through holes 10a, 11a back and forth with the reciprocal plate motion, as shown Fig. 4 and Fig. 5.

Therefore, the molten resin flow 4h is able to reach to even a narrow gap Pw which is made by the 1st plate 10 (the 2nd plate 11) and the 1st inner plane 4c (the 2nd inner plane 4d).

Therefore, the molten resin 4 spread through the surface of the 1st plate 10 (the 2nd plate 11), and a resin wettability of these plates is improved.

And as a result, to prevent a void forming between metal plate and resin, resin molding, for example resin panel, strength against a distortion is improved.

Incidentally, in the case of using a thermosetting resin as the molten resin 4, a surface of the 1st plate 10 (the 2nd plate 11) is compressed equally, for the resin material 3A curing shrinkage, therefore, the resin molding 1 strength is improved, to advance the adhesiveness between a plate and a resin material. And in the case of using the injection molding, the resin molding 1 strength is improved too, with the resin material 3A thermal shrinkage.

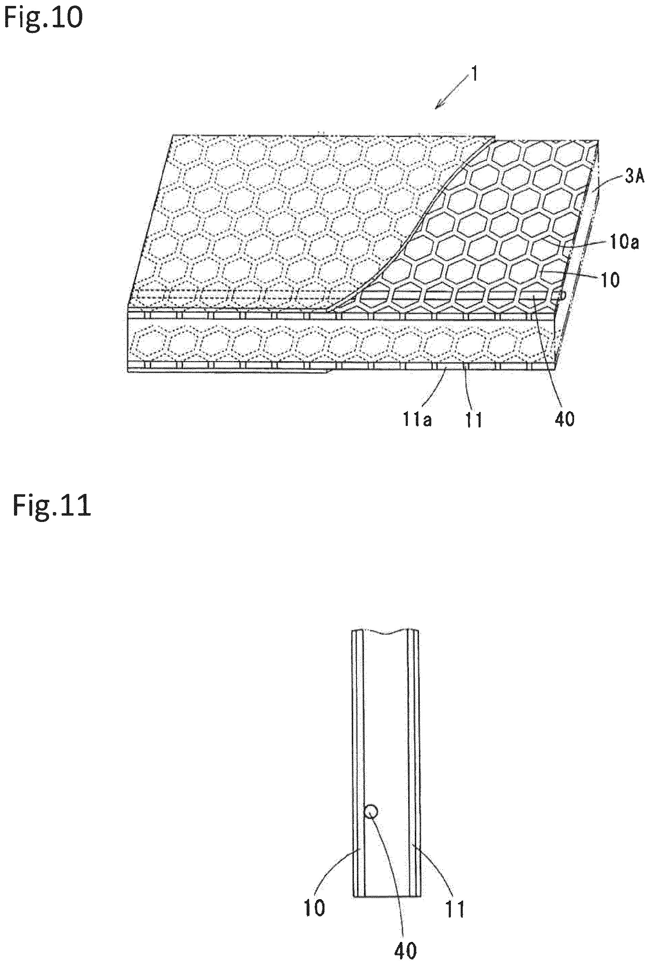

Referring Fig.10 and Fig. 11 shown is a production method for a resin molding 1 inserted a 1st plate 10 having many through holes 10a and a 2nd plate 11 having many through holes 11a, according to a 2nd embodiment.

In the 2nd embodiment, a wire 40 is attached to the cavity side of the 1st plate 10.

This makes it possible that the wire 40 is embedded the molten resin 4 (the resin material 3A). Therefore, the attachment process of the wire 40 to the resin molding 1 is able to be omitted. And the wire 40 needs not to be coated, because the resin material 3A is an insulator.

### Modification Forms

The cavity may be not only filled with a molten resin kept to a high pressure, but also filled with a molten resin kept to a normal pressure.

The number of the movable bar 7 may be not only one pair, but also one, three, etc..

The through holes 10a and 11a may show not only hexagonal shape, but also circle, rectangle, pentagonal etc. shape. And through hole 6, 6a may select a proper shape depending on the through holes 10a and 11a,

The 1st plate 10 and the 2nd plate 11 may be adopted not only planar plate but also curved surface plate.

The density distribution of the through holes 10a and 11a may be not only homogeneous, but also inhomogeneous.

## Claims

1. A production method for a resin molding inserted a 1st plate having many through holes and a 2nd plate having many through holes, which are arranged in parallel and facing each other during a manufacturing process, comprising:
a 1st plate process in which, said 1st plate moves to said 2nd plate side from a 1st plate start position and returns a 1st plate end position near said 1st plate start position in a cavity filled with a molten resin kept to a high pressure;
a 2nd plate process in which, said 2nd plate moves to said 1st plate side from a 2nd plate start position and returns a 2nd plate end position near said 2nd plate start position in said cavity.

2. The production method of claim 1, wherein said cavity is formed by an upper metal mold and a lower metal mold, and said upper metal mold and said lower metal mold have a movable bar which is driven by an actuator and is able to move forward and backward in said cavity respectively, and said movable bar has an electromagnet which is able to catch and release a metal plate, and at said 1st plate end position said electromagnet current is cut off and said movable bar releases said 1st plate and, at said 2nd plate end position said electromagnet current is cut off and said movable bar releases said 2nd plate.

3. The production method of claim 1 or 2, wherein said 1st plate and said 2nd plate are a punched metal plate.

4. The production method of claim 1, 2 or 3, wherein said molten resin is a thermosetting resin including an epoxy and a polyurethane resin.

5. The production method of any one of claims 1 to 4, wherein a wire is attached to said 1st plate or said 2nd plate.
